# EUROPEAN PATENT APPLICATION

(11) **EP 4 848 167 A1**
(43) Date of publication of application: **02.12.2026**
(21) Application number: 26182264.7
(22) Date of filing: 01.06.2026
(51) Int. Cl.: G06Q 10/06, G06Q 10/10, G06Q 50/04

(54) **A COMPUTER-IMPLEMENTED METHOD FOR GENERATING MANUFACTURING DATA, AND ASSOCIATED APPARATUS**

(30) Priority: 30.05.2025 GB 202508501
(71) Applicant: Smart Manufacturing Solutions Technology Ltd, Durham, Seaham SR7 0PY (GB)
(72) Inventor: WILLIAMS,, Peter, Durham (GB)
(74) Representative: Potter Clarkson

(57) **Abstract**

A computer-implemented method for generating manufacturing data from manual processes within a manufacturing environment from a plurality of operator devices. The method comprises, for each of the plurality of operator devices: receiving a unique product identifier of a product that is processed by an operator; receiving an operator identifier indicative of the operator; determining one or more of a plurality of different data entry forms for displaying to the operator based on the product identifier and operator identifier, wherein the data entry forms are specific to the operator identifier; displaying the data entry forms to the operator on the operator device; receiving operator-provided manufacturing data into a displayed data entry form; the operator device transmitting the manufacturing data and accompanying product identifier to a server; and the server storing, in computer memory, the manufacturing data associated with the accompanying product identifier received from each of the plurality of operator devices.

## Description

### Field

The present disclosure relates to a computer-implemented method for generating manufacturing data and associated apparatus. In particular, the generated manufacturing data can be used for ensuring product conformance of products in a manufacturing or assembly environment.

### Summary

According to a first aspect of the present disclosure, there is provided a computer-implemented method for generating manufacturing data from manual processes within a manufacturing environment from a plurality of operator devices, the method comprising, for each of the plurality of operator devices:
receiving a unique product identifier, which is a unique identifier of a product that is being processed by an operator;
receiving an operator identifier, which is indicative of the operator that is processing, or has processed, the product;
determining one or more of a plurality of different data entry forms for displaying to the operator based on the received unique product identifier and operator identifier, wherein the one or more determined data entry forms are specific to the operator identifier;
displaying the one or more determined data entry forms to the operator on the operator device;
receiving operator-provided manufacturing data into a displayed data entry form;
the operator device transmitting the operator-provided manufacturing data and the accompanying unique product identifier to a server; and
the server storing, in computer memory, the manufacturing data associated with the accompanying unique product identifier received from each of the plurality of operator devices.

The operator identifier may be indicative of one or more tasks that an associated operator is expected to perform on the product.

The step of the server storing, in computer memory, the received operator-provided manufacturing data associated with the accompanying unique product identifier received from each of the plurality of operator devices may comprise:
storing the data in such a way that all received operator-provided manufacturing data that is associated with the same unique product identifier is accessible by searching for the unique product identifier.

The products may be vehicles. The unique product identifier may comprise a vehicle identification number.

Receiving the unique product identifier may comprise the operator scanning a machine-readable code with their operator device.

The operator device may comprise a portable electronic device, such as a mobile phone or a tablet computer.

The operator identifier may be:
unique to an individual operator,
specific to the operator device,
associated with a class of user, or
associated with a location of the operator device as determined by location-determining data associated with the operator device.

The one or more determined data entry forms may have a product identifier field, which is pre-populated with the received unique product identifier.

The one or more determined data entry forms may comprise a location field for receiving a location identifier that represents a location of the operator within a facility when they perform the process on the product.

The method may comprise automatically populating the location field.

The one or more determined data entry forms may comprise a task completion form, which relates to a task that is to be performed by the operator. The task completion form may comprise one or more of the following fields:
a task description field, for presenting a predefined set of selectable options to the operator;
a comment field, for receiving the operator's comments as free text; and
an image field for receiving images of the product before, during or after the task.

The one or more determined data entry forms may comprise a non-conformance entry form for an operator to record an identified non-conformance associated with the product. The non-conformance entry form may comprise one or more of the following fields:
a non-conformance description field, for presenting a predefined set of selectable options to the operator;
a non-conformance type field, for presenting a predefined set of selectable options to the operator;
a comment field, for receiving the operator's comments as free text;
an image field, for receiving an image of the identified non-conformance;
an engineering drawing field for one or more components of the product for annotation by the operator for providing details of the identified non-conformance.

The one or more determined data entry forms may comprise a non-conformance review form for an operator to record the results of a review of a previously identified non-conformance associated with the product. The non-conformance review form may comprise one or more of the following fields:
a non-conformance identifier field for receiving a non-conformance identifier that is associated with the previously identified non-conformance;
a non-conformance information field, which displays previously provided non-conformance data, including any previously captured images or previously annotated engineering drawings.
a non-conformance status field, for receiving an update on the status of the non-conformance from the operator;
a comment field, for receiving the operator's comments as free text;
an image field, for receiving an image of the identified non-conformance;
an engineering drawing field for one or more components of the product for annotation by the operator for providing details of the status of the identified non-conformance.

There may be provided a computer program, which when run on a computer, causes the computer to configure any apparatus, including a circuit, controller, converter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download. There may be provided one or more non-transitory computer-readable storage media storing computer-executable instructions that, when executed by a computing system, causes the computing system to perform any method disclosed herein.

### Brief Description of the Drawings

One or more embodiments will now be described by way of example only with reference to the accompanying drawings in which:
Figure 1 illustrates schematically a manufacturing facility, such as a factory, that has three assembly lines;
Figure 2 shows an example system according to an embodiment of the present disclosure;
Figure 3A shows schematically how a system can be used to generate manufacturing data for a vehicle as it passes through a manufacturing facility;
Figure 3B shows a process flow, which is associated with the system of Figure 3A, that represents a computer-implemented method for generating the manufacturing data;
Figure 4A shows an example user interface that can be displayed to an operator on their operator device prior to displaying a data entry form; and
Figures 4B and 4C show examples of data entry forms that can be subsequently displayed on the operator device.

### Detailed Description

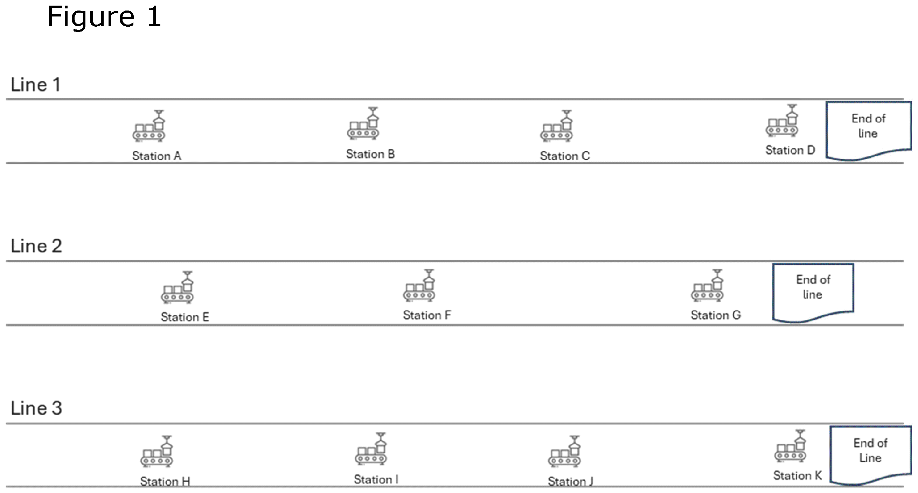

Figure 1 illustrates schematically a manufacturing facility, such as a factory, that has three assembly lines. Each assembly line can have one or more stations at which an operation is performed on a product that is being assembled. In this example, a product is assembled as it passes along each of the three assembly lines in turn. An end of line (EOL) check is performed on a product when it reaches the end of each line, before it moves on to the next line. This EOL check should identify any faults or defects associated with the product (which may or may not have already been identified as the product is passed along the line) such that they can be repaired before the product is shipped.

The majority of the following description relates to the assembly of a vehicle, and the generation of manufacturing data as the vehicle is assembled. However, it will be appreciated that in other embodiments the manufacturing data can relate to any other suitable product in any suitable industry. We will provide examples of some alternative products and industries at the end of this description. Therefore, in this context of the present disclosure, the terms "manufacturing" and "assembly" should be considered as broad terms that encompass assembly, manufacture and / or any other processing operations that are performed on a product.

Returning now to Figure 1, we will describe how the assembly lines can be used to assemble a vehicle. It is known in the art for a physical history card (which can also be known as a build card) to accompany the vehicle as it passes along the lines. The history card includes a unique identifier for the vehicle (typically a vehicle identification number (VIN)). As the vehicle passes through each station on each line, an operator updates the history card by writing an update on the history card that is associated with the operation that they have performed on the vehicle. Also, if an operator identifies any defects on the vehicle (either as they perform their task at a station, or as part of an inspection of the vehicle at the end of the line) they can make a record of the defects by writing them on the history card. In many industries, including vehicle assembly, a significant proportion of the operations that are performed at the stations are manual operations. Therefore, it is not possible for the history card to be automatically updated as the product passes along the lines. In the automotive industry, each history card can often be around 8 pages long. In a year where 8.8 million new vehicles are assembled, the use of such history cards requires about 70 million sheets of paper (which, when combined with other factors such as transportation and printing, can account for approximately 1.5 million kilograms of annual CO2 equivalent emissions (kgCO2e)). Clearly this is sub-optimal from an environmental perspective.

When assembly of the vehicle is completed, the history card will be electronically scanned in. Therefore, a record of the various steps in the assembly of the vehicle is maintained. However, such an electronic record of the history card is not particularly useful. For example, the information that has been hand-written onto the history card is not always provided by the operators in a consistent form and using consistent language. For instance, different operators may refer to the same components by different names. Also, it may not always be possible for optical character recognition (OCR) software to accurately decipher what has been written onto the history cards. Furthermore, even it is possible to accurately extract the hand-written information from the history cards (which typically isn't possible) then it would only be available in electronic form after the assembly of the vehicle has been completed and the history card has been scanned in.

This approach of using physical history cards is deep-rooted in the automotive industry, as well as many other industries. Although various software applications are known to be used in the assembly of vehicles, such as MRP (material requirements planning), ERP (enterprise resource planning), and MES (manufacturing execution system) applications, none of these applications can replace the need for the physical history cards that are currently in use.

We will now describe how embodiments of the present disclosure can beneficially generate better manufacturing data, from manual processes within a manufacturing environment, which is usable to ensure product conformance of a product. As will be discussed in detail below, advantageously the generated manufacturing data can massively improve the efficiency of the assembly / manufacturing facility, it can enable defects to be identified more effectively and for them to be resolved more quickly, it can result in fewer products (in this example vehicles) exiting the facility with unresolved defects, and / or it can enable any systematic or regular operations that result in defects to be identified. One or more of these benefits are not possible with known processes, and especially those that use a physical history card as discussed above.

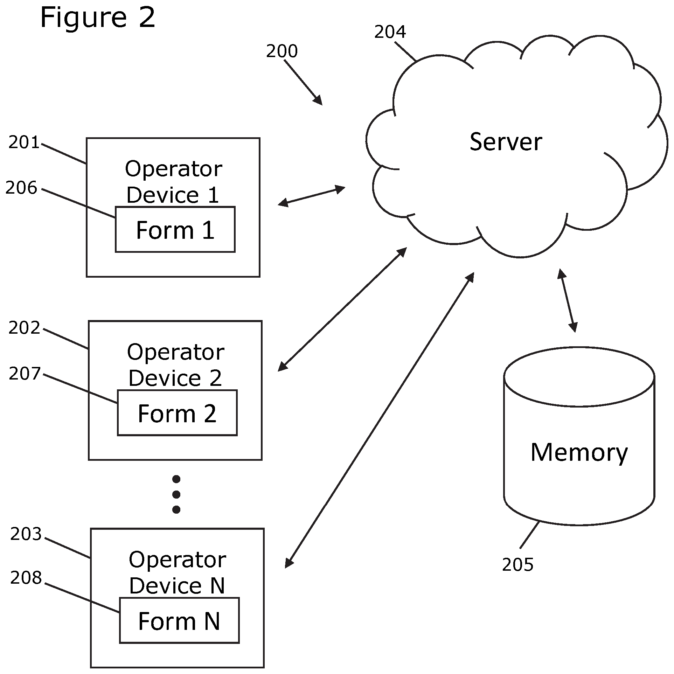

Figure 2 shows an example system 200 according to an embodiment of the present disclosure. The system 200 includes a plurality of operator devices 201, 202, 203, each of which is used by an operator (not shown) when processing a vehicle as it passes along an assembly line. For instance, as will be discussed in detail below, the operator can use the operator device 201, 202, 203: i) when they perform a task on the vehicle (such as an assembly or manufacturing task), ii) to record a defect that they have identified on the vehicle, and / or iii) to record the results of a review of an identified defect on the vehicle. Such a review can include resolving the defect. When using the operator device 201, 202, 203, the operator can interact with a data entry form 206, 207, 208 that is displayed on the operator device 201, 202, 203 in order to provide manufacturing data into the data entry form 206, 207, 208. This will also be described in detail below. In addition, the operator device 201, 202, 203 also receives a unique product identifier, which is a unique identifier of the product that is being processed by the operator. In this example, the unique product identifier is a VIN.

As will be appreciated from the discussion that follows, the operator devices 201, 202, 203 are independent of any machinery that is actually performing a manufacturing operation on the vehicle, in that they are usable by the operator to provide information about a manual task that they have performed or to provide information about something that they have observed on the vehicle. The operator devices 201, 202, 203 are not robots that perform an autonomous manufacturing operation on the vehicle.

Each of the operator devices 201, 202, 203 transmits the operator-provided manufacturing data and the associated VIN to a server 204. The server 204 can then store, in computer memory 205, the manufacturing data associated with the accompanying VIN received from each of the plurality of operator devices. The server 204 could be local to the manufacturing facility, which is beneficial for if the products are sensitive (for example they relate to military technology) or the functionality of the server 205 could be implemented in the cloud.

By storing the manufacturing data in computer memory 205 associated with the VIN, this enables very significant advantages to be achieved. The server 304 can store the data in the computer memory 305 in such a way that all received operator-provided manufacturing data that is associated with the same unique product identifier is accessible by searching for the unique product identifier. For instance, multiple sets of manufacturing data can be retrieved from the computer memory 205 by searching for the unique product identifier. In this way, data silos are avoided in which each set of manufacturing data would be stored in a way that it is not readily combinable with other sets of manufacturing data for the same vehicle. If standard data entry form software were used, then such data silos would exist. This is because it is not typically possible to store the data entered into a standard data entry form in such a way that the data associated with unique identifiers (the VINs in this example) can be pulled together. Furthermore, it is not currently possible to use standard data entry form software in order to enable users to configure their own forms, where such forms include a unique identifier as an essential field in each of the forms, and also save the data that has been entered into those forms in computer memory such a way that data silos are avoided.

Furthermore, by transmitting and storing the manufacturing data in real-time (or near real-time), as opposed to only after assembly of the vehicle is complete, additional advantages are unlocked. These will be discussed below.

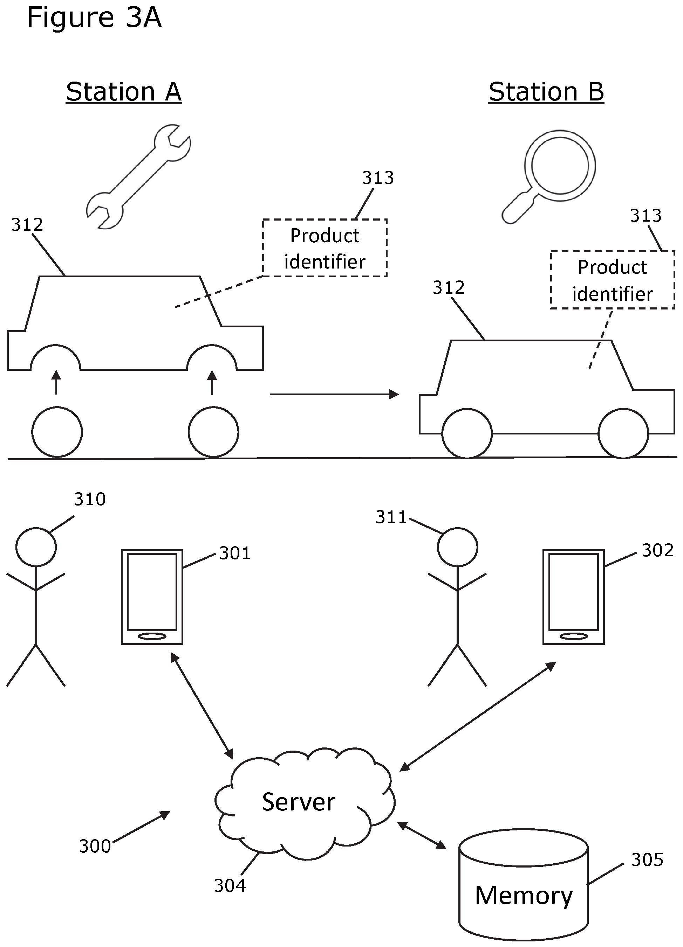

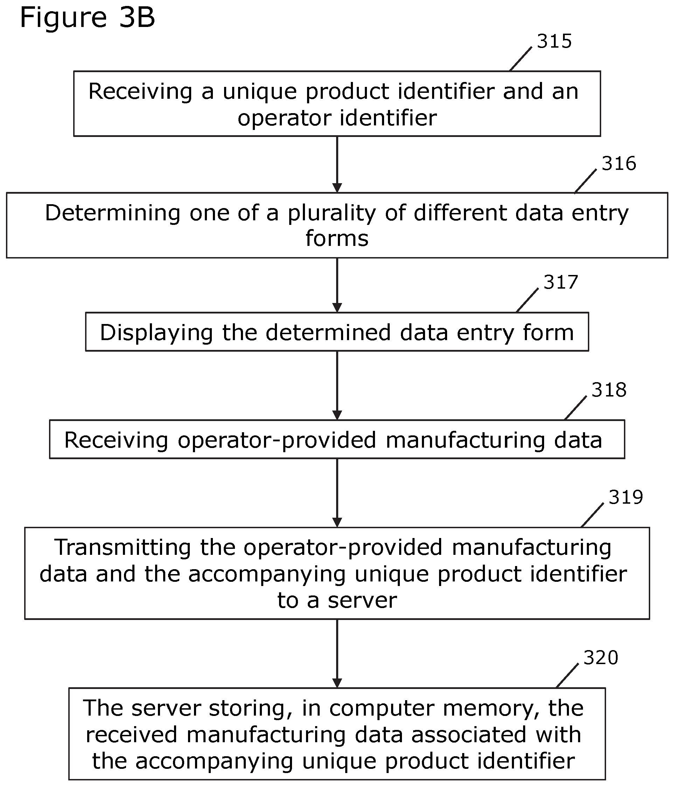

Figures 3A and 3B will be used to describe in more detail how an operator 310, 311 can interact with an operator device 301, 302, such as the ones that are illustrated in Figure 2. In the same way as Figure 2, the operator devices 301, 302 are in communication with a server 304, and the server 304 has access to computer memory 305. Figure 3A shows schematically how a system 300 can be used to generate manufacturing data for a vehicle 312 as it passes through a manufacturing facility. Figure 3B shows an associated process flow that represents a computer-implemented method for generating the manufacturing data. The process flow of Figure 3B is implemented by the operator devices 301, 302 and the server 304 of Figure 3A.

As shown in Figure 3A, a first operator 310 is associated with a first station, Station A, on an assembly line. Also, a second operator 311 is associated with a second station, Station B, on the same assembly line. The first operator 310 interacts with a first operator device 301. Similarly, the second operator 311 interacts with a second operator device 302. As non-limiting examples, an operator device 301, 302 may be a portable electronic device, such as a mobile phone or a tablet computer. Alternatively, an operator device 301, 302 may be a static electronic device such as a workstation that is associated with a particular station in an assembly line.

The vehicle 312 that is shown in Figure 3A has a unique VIN, as is known in the art, which is represented as a unique product identifier 313 in Figure 3A. In some examples, the unique product identifier 313 can be represented by a machine-readable code that is attached to the vehicle 312. For instance, a QR code that represents the unique product identifier 313 can be attached to the chassis of the vehicle before it passes along the lines. Then, the operator 310, 311 can scan the QR code using their operator device 301, 302 before they perform their task on the vehicle 312. This is one way in which an operator device 301, 302 can receive a unique product identifier 313 of the vehicle 312 that they are processing, which is illustrated as part of step 315 in Figure 3B.

In other examples, the unique product identifier 313 can be manually provided by the operator 310, 311 as input data into the operator device 301, 302.

The other part of step 315 in Figure 3B is that the operator device 301, 302 receives an operator identifier. The operator identifier is indicative of the operator that will process, or has processed, the vehicle 312. The operator identifier could be unique to an individual person / operator 310, 311, which can be useful for subsequently providing traceability to the individual that processed the vehicle. Such an operator identifier can be known to the operator device 301, 302, for example if the operator needs to log in to the operator device 301, 302 (or log in to an application on the operator device 301, 302) in order to use the functionality that will be described below. Alternatively, the operator identifier could be specific to the operator device 301, 302, which can be useful if the operator device 301, 302 is a fixed device that is always associated with the same station in a line. As a further example still, the operator identifier could be associated with a specific class of user, such as a class of user that has a specific operational function (e.g., a member of a paint spraying team that is associated with spraying the vehicle 312), or the operator could have been assigned to a line such that they have an operator identifier that is linked to all stations on that line. As a yet further alternative, the operator identifier could be associated with a location in the facility as determined by location determining-software (such as GPS or a beacon-based location system). In any case, at step 315 in Figure 3B the operator device 301, 302 receives an operator identifier, which can be indicative of one or more tasks that an associated operator 310, 311 is expected to perform on the vehicle 312.

At step 316, the operator device 301, 302 then determines one or more of a plurality of different data entry forms for displaying to the operator 310, 311 based on the received unique product identifier 313 and the operator identifier. The one or more determined data entry forms are specific to the operator identifier, although it will be appreciated that the determined data entry forms do not need to be unique to the operator identifier. That is, the same data entry form can be displayed to multiple individual operators that have different operator identifiers because, for example, they are expected to perform the same task. The operator device 301, 302 may be able to determine the correct data entry form itself using information that is available locally on the operator device 301, 302 or it may make the determination by looking up information in the computer memory 305 via the server 304, for example.

In this way, one or more data entry forms can be retrieved from memory that are specific to the operator identifier. For example, Jane's operator identifier may indicate that she is responsible for fitting wheels to the vehicle 312, and therefore the system automatically determines a data entry form for Jane that is associated with the task of fitting wheels. Beneficially, the data entry forms can be configurable, in that an administrator that is associated with the manufacturing facility can configure bespoke data entry forms that are suitable for their industry and for the tasks that are to be performed by their operators 310, 311. We will describe some examples of data entry forms for the automotive industry below, although it will be appreciated that any of the fields mentioned for any of the individual data entry forms can be combined with any of the other fields, in any combination, as appropriate for a specific application.

In some examples, the one or more determined data entry forms can also be associated with the unique product identifier. For example, a determined data entry form can be the same for all product identifiers that relate to the same type of product. In this way, for example, a data entry form can be determined that is specific to the model of the vehicle that is represented by the VIN.

At step 317 in Figure 3B, the determined data entry form is displayed to the operator 310, 311 on their operator device 301, 302. Specific details of example data entry forms will be described in more detail below. Nonetheless, generally speaking, a data entry form includes one or more fields that the operator 310, 311 can use to provide operator-provided manufacturing data. The operator-provided manufacturing data can relate to a task that is performed by the operator 310, 311, it can relate to fault (or, more generally, a non-conformance) that has been identified by the operator 310, 311, and / or it can relate to the results of a review of a previously identified fault. As will be discussed below, the operator 310, 311 can provide the operator-provided manufacturing data in any suitable way, including one or more of: a free-form text box, a drop-down box for selecting one or more predefined options, by taking a photograph, or by marking-up a photograph or other illustration of the vehicle or a component part of the vehicle, as non-limiting examples. The reception of this operator-provided manufacturing data from the operator 310, 311 at the operator device 301, 302, in whatever form it takes, is represented by step 318 in Figure 3B.

At step 319 in Figure 3B, the operator device 301, 302 transmits the operator-provided manufacturing data and the accompanying unique product identifier 313 to the server 304. As discussed above, the unique product identifier 313 has been received by the operator device 301, 302 at step 315. In some examples, the unique product identifier 313 can be displayed on the operator device 301, 302 as part of the data entry form. This can be useful to enable the operator 310, 311 to identify any anomalies with the unique product identifier 313 that has been received by the operator device 301, 302 such that potentially it can be corrected.

In some examples, the operator device 301, 302 can also transmit a timestamp as part of the manufacturing data. The timestamp may indicate the time that a task was performed, the time at which a defect was identified, or any other suitable time. In other examples, the server 304 may apply a timestamp based on the time that it receives the manufacturing data. The operator device 301, 302 may also transmit the operator identifier associated with the operator 310, 311 that completed the form and / or an identifier associated with the operator device 301, 302 along with the operator-provided manufacturing data and the unique product identifier 313.

Then, at step 320, the server 304 stores in computer memory 305 the received manufacturing data associated with the accompanying unique product identifier 313. It will be appreciated that the server 305 will receive data from a plurality of operator devices 301, 302. Some of this data will relate to the same vehicle 312, some of it will relate to different vehicles 312. In any case, storing the unique product identifier 313 along with the operator-provided manufacturing data to the server 304 enables the data to be used in a much more meaningful way than is possible in the prior art.

As discussed above, the server 304 can store the data in the computer memory 305 in such a way that all received operator-provided manufacturing data that is associated with the same unique product identifier 313 is accessible by searching for the unique product identifier 313, and therefore data silos can be avoided. In contrast, if standard data entry form software were used, then such data silos would exist for reasons explained above. Therefore, the process flow that is illustrated in Figure 3B is more than a mere automation of known history cards. Instead, it differs in the following ways:
- a plurality of different data entry forms are available, and the process flow determines one of those forms for displaying to the operator based on the received VIN and an operator identifier associated with the operator. This greatly improves the ease with which the operator can provide the manufacturing data, and therefore also the accuracy of the manufacturing data;
- the association of the product identifier (in this example the VIN) with the manufacturing data that is provided into each and every data entry form is hugely important to enable the manufacturing data that has been provided by different operators to be brought together when the data that is stored in the memory 305 is subsequently processed;
- the data entry forms are configurable for a particular use-case, yet are consistent once they are implemented for that use-case in such a way that reliable and consistent manufacturing data can be captured;
- the system 300 of Figure 3A and the process flow of Figure 3B significantly improves the ability of a manufacturer to achieve product conformance. This can be achieved by one or more of the following, which derive from the way in which the manufacturing data is captured and stored:
   o an improved ability of operators to record defects (as will be discussed below), and therefore an increased likelihood that those defects will be resolved before the product is shipped;
   ∘ an improved ability to identify any trends in a manufacturing facility that are resulting in defects, and therefore an improved ability to reverse those trends such that fewer products are shipped with defects. In turn, beneficially this can result in reduced waste / scrappage of shipped products and also fewer instances of repairs needing to be made to products that have been shipped;
- the manufacturing data is stored in such a way that a much more accurate overview of the assembly process and also the product can be determined. This is due to that fact that the server 304 stores the manufacturing data associated with the product identifiers that are received from each of the plurality of operator devices. We will provide detailed examples of how the stored manufacturing data can be used below.

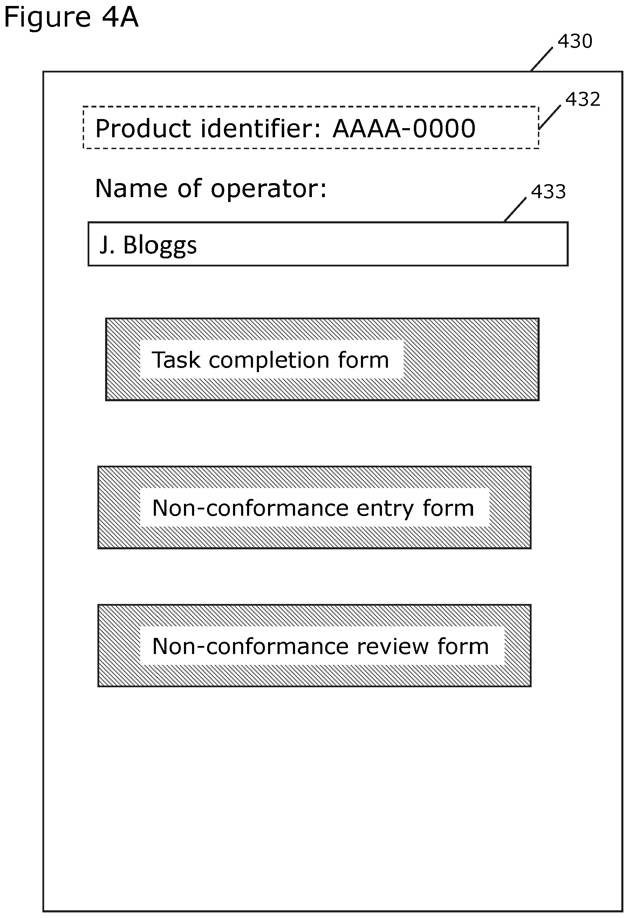

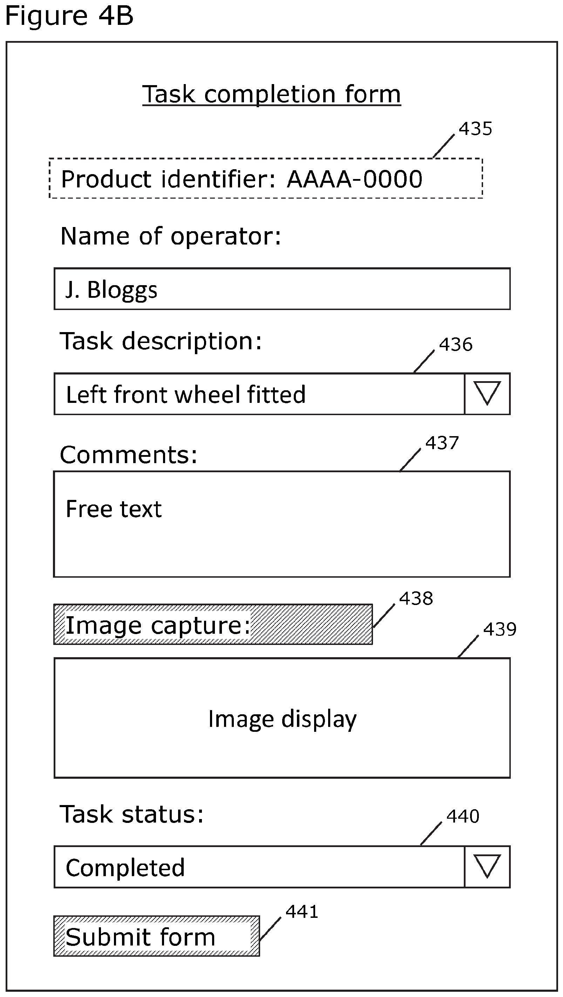

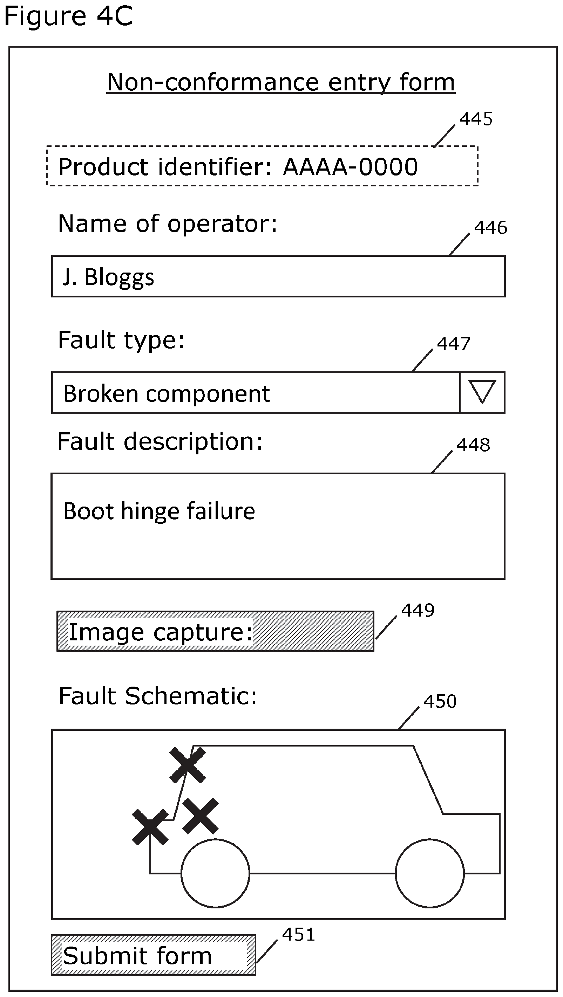

Figure 4A shows an example user interface 430 that can be displayed to an operator on their operator device prior to displaying a data entry form. Figures 4B and 4C show examples of data entry forms 431 that can be subsequently displayed on the operator device.

The user interface 430 of Figure 4A can be displayed to the operator in response to the operator device receiving the VIN and the operator identifier, as discussed above. In this example, the VIN is displayed to the operator in a Product identifier textbox 432. Also, the name of the operator is displayed in another textbox 433. In some examples the operator will have had to log in to the system, in which case the operator device has details of the name of the operator such that it can be displayed on the user interface 430. Optionally, the user interface 430 may also display the operator identifier, which may or may not be the same as the name of the operator.

In the example of Figure 4A, for the specific product identifier and operator identifier that have been received, three different data entry forms have been determined as suitable for displaying to the operator. These three forms are: a task completion form, a non-conformance entry form, and a non-conformance review form. The operator can select which of these forms they wish to interact with, for example by pressing an associated button that is displayed on the user interface 430 as shown in Figure 4A.

The task completion form can be specific to a particular task that is associated with the operator identifier, for example a task that the operator is qualified to complete. The non-conformance entry form can be used by the operator to record an identified fault / defect (or other non-conformance) associated with the vehicle. In some examples, all operators can be provided with the functionality to record non-conformities. The non-conformance entry form may be a generic one that is displayed in the same way to all operators, or a particular instance of the non-conformance entry form may be displayed that is associated with the operator identifier. For example, a non-conformance entry form may be determined that is associated with the task that the operator is expected to perform (for instance a wheel fault reporting form may be displayed to an operator that has the task of installing wheels onto the vehicle). The non-conformance review form can enable the operator to record the results of a review of a previously identified non-conformance associated with the vehicle. For instance, an operator that is tasked with repairing faults can use the non-conformance review form to record the results of their review of the fault and potentially the resolution of the fault. In some applications, only operators that are qualified to repair defects may have access to the non-conformance review form.

Figure 4B shows an example of a task completion form according to an embodiment of the present disclosure. The task completion form relates to a task that is to be performed by the operator, and in this example is associated with an operator that is responsible for fitting wheels to a vehicle.

The task completion form includes a product identifier field 435, which is pre-populated with the received unique product identifier in this example so that it is visible to the operator. The product identifier field 435 may be considered as a mandatory field in the sense that the task completion form (and also the user interface of Figure 4A) will not be displayed to the operator until the operator's device has received the product identifier. Furthermore, it may be prohibited for the operator to delete the information in the product identifier field 435 such that it is left empty, or at least it will not be possible for the operator to submit the form without a valid product identifier in the product identifier field 435. The form also includes a "Name of the operator" field, that is the same as the corresponding one that is shown in Figure 4A.

The task completion form of Figure 4B also includes the following fields, which are for receiving operation data. Such operation data is an example of the operator-provided manufacturing data that is described elsewhere in this document. It may be mandatory for the operator to enter data into one or more of the following fields.
- A task description field 436, which in this example presents a predefined set of selectable options to the operator. For example, the operator can select one of the predefined selectable options using a dropdown box. An advantage to presenting this type of field is that the data that is entered by the operator will be provided in a consistent way, and therefore this enables it to be more readily compared with data that is entered by other operators.
- A comments field 437, which is for receiving the operator's comments as free text.
- An image field for receiving images of the product before, during or after the task. For example, the operator can press an "image capture" button 438 in order to capture an image using the operator device, such that the captured image is displayed in an image display box 439.
- A task status field 440, that the operator can use to record the status of the task before they submit the form. As shown in the drawing, this can be implemented as a dropdown box.
- A task location field (not shown in Figure 4B) for receiving a location identifier that represents a location within a facility at which the task is performed. The location identifier can be implemented in a number of different ways:
   ∘ The location identifier can include a line identifier, which is associated with a specific production / assembly line in the facility at which the product was located when the form was completed.
   ∘ The location identifier can include a station identifier, which is associated with one of a plurality of stations on a production / assembly line in the facility at which the product was located when the form was completed.
   ∘ The operator device can automatically populate the task location field in some examples. For instance, the operator can scan a machine-readable code associated with the location (which could a be a specific line or station on a line). Alternatively, the operator device can use a location-determining application, such as GPS, that is associated with the operator device to determine the location identifier. As a further still alternative, the location identifier can be hard-coded as being associated with the operator identifier (i.e., the operator is always expected to perform their task or tasks at the same location) or it can be associated with the determined data entry form. I.e., if the operator is given a choice of data entry forms, then a predetermined location identifier can be identified by the operator device in response to the operator selecting one of the data entry forms. That is, if the operator selects a wheel-fitting data entry form, then the task location field may be pre-populated with a location identifier that corresponds to a wheel-fitting station. Whereas, if the operator selects a windscreen wiper fitting data entry form, then the task location field may be pre-populated with a location identifier that corresponds to a windscreen wiper fitting station.
   ∘ The operator could manually provide the location identifier to the task completion form, for example using a dropdown box.

As shown in Figure 4B, the task completion form in this example has a "Submit form" button 441 that the operator can press when they have completed the form. Pressing this button causes the operation data, along with the accompanying product identifier, to be transmitted to a server such that it can be saved in memory as discussed above.

Figure 4C shows an example of a non-conformance entry form according to an embodiment of the present disclosure. As discussed above, the non-conformance entry form allows for an operator to record an identified non-conformance (such as a fault or a defect) associated with the product.

The non-conformance entry form includes a product identifier field 445 and a "Name of the operator" field 446, which are the same as the corresponding ones shown in Figure 4B.

The non-conformance entry form of Figure 4C also includes one or more of the following fields, which are for receiving non-conformance data. Such non-conformance data is an example of the operator-provided manufacturing data that is described elsewhere in this document. It may be mandatory for the operator to enter data into one or more of the following fields.
- A non-conformance type field 447, which in this example is for enabling the operator to select one of a predefined set of selectable options.
- A non-conformance description field 448, for receiving the operator's comments as free text.
- An image field for receiving one or more images of the identified non-conformance. For example, the operator can press an "image capture" button 449 in order to capture an image using the operator device.
- An engineering drawing field 450, which can be used to displaying an engineering drawing of the product or a component of the vehicle that is associated with the identified non-conformance. The engineering drawing field 450 may advantageously enable the operator to annotate the displayed engineering drawing to help further identify the detected non-conformance.

In some examples, the system can automatically determine which components to display in the engineering drawing field. This can be in response to non-conformance data that has been provided by the operator in one of the other fields, such as the name of the operator field 446, the non-conformance type field 447 or the non-conformance description field 448. In this way, a process flow of the present disclosure can also include the following steps:
- identifying one or more components of the product that are associated with the identified non-conformance based on information that is entered into other fields of the non-conformance entry form by the operator;
- retrieving engineering drawings that are associated with the identified components from computer memory; and
- displaying the retrieved engineering drawings to the operator for annotating as part of the non-conformance entry form.

Optionally, the process flow can apply a classification algorithm to a received image of the identified non-conformance to identify one or more components of the product that are associated with the identified non-conformance. That is, the operator can capture one or more images of the non-conformance by pressing the "image capture" button 449, and then the process flow can retrieve engineering drawings from computer memory that are associated with the identified components and subsequently display the retrieved engineering drawings to the operator in the engineering drawing field 450.

In some applications, in the same way as the task completion form that is described above, the non-conformance entry form of Figure 4C can also include a task location field for receiving a location identifier that represents a location within a facility at which the non-conformance was identified. The location identifier could be a line identifier or a station identifier as discussed above, and can be populated in any of the ways that are discussed above.

As shown in Figure 4C, the non-conformance entry form also includes a "Submit form" button 451 that the operator can press when they have completed the form. Pressing this button causes the non-conformance data, along with the accompanying product identifier, to be transmitted to a server such that it can be saved in memory as discussed above.

In this example, in response to the operator pressing the "Submit form" button 451 (or in response to the server receiving the non-conformance data) the system (either the operator device or the server) assigns a non-conformance identifier to the non-conformance data. The non-conformance identifier is unique to the completed non-conformance entry form.

The use of non-conformance identifiers and / or the unique product identifiers can beneficially assist with the system being able to analyse non-conformance data that is stored in computer memory. For instance, the stored data can be processed in order to categorise non-conformances such that all non-conformances associated with the same product can be extracted from memory and displayed to a user and / or such that the overall contribution of non-conformances on all products can be extracted and displayed. In some applications, this can be especially beneficial because it can provide the ability to locate any other potentially at-risk products such that the non-conformances can be pro-actively addressed. In turn, this can reduce the likelihood of warranty-related complaints being raised or at least allow any such complaints to be dealt with more effectively. This is not possible with paper-based history card reporting.

We will now describe a non-conformance review form according to an embodiment of the present disclosure, which is not illustrated in the drawings. The non-conformance review form enables an operator to record the results of a review of a previously identified non-conformance associated with a product. The non-conformance review form can include one or more of the following fields (for receiving non-conformance review data as an example of operator-provided manufacturing data):
o A non-conformance identifier field for receiving a non-conformance identifier that is associated with the previously identified non-conformance. In some examples, in response to the operator device receiving a unique product identifier, the process flow can present a list of non-conformance identifiers that are associated with the unique product identifier for selection by the operator (e.g., as a dropdown list).
∘ A non-conformance information field, which can display previously provided non-conformance data. As discussed above with reference to Figure 4C, this can include a type of non-conformance, a description of the non-conformance, an image of the non-conformance and / or a previously annotated engineering drawing.
∘ A non-conformance status field, which the operator can use to provide an update on the status of the non-conformance. For example, so that the operator can mark the non-conformance as resolved, awaiting parts, etc. In some examples, this can be presented for selection from a list of predefined (dropdown) options. As discussed above, using a list of predefined options can be beneficial for consistency of data input, which therefore can improve the accuracy and range of analytics operations that can be performed on the data.
∘ A comment field, for receiving the operator's comments as free text.
∘ An image field, for receiving one or more images of the identified non-conformance, for example before and after a repair that is performed by the operator.
∘ An engineering drawing field for displaying one or more components of the product for annotation by the operator. For instance, so that the operator can provide updated details of the status of the identified non-conformance (e.g., components that have been repaired, components that require replacement, etc.). In examples where an engineering drawing has been annotated by an earlier operator that reported the non-conformance, the current operator can further annotate the same drawings that have previously been annotated.
∘ A task location field for receiving a location identifier that represents a location within a facility at which the non-conformance was reviewed. The location identifier could be a line identifier or a station identifier as discussed above, and can be populated in any of the ways that are discussed above.

In some examples, if the manufacturing data that is provided by the operator device does not include a location identifier, the server 304 can determine a location identifier to the received manufacturing data and store that location identifier in memory as part of (or associated with) the manufacturing data. For instance, the server 304 can determine the location identifier for a received set of manufacturing data based on one or more previously received sets of operator-provided manufacturing data. For instance, the server 304 can inspect previously received sets of operator-provided manufacturing data that are stored in memory 305 for the same vehicle 312 and identify the most recently completed end-of-line check. The server 304 can then allocate a line identifier associated with the next line in the manufacturing facility (i.e., the next line after the most recent end-of-line checkpoint). To do, in some examples, the server 304 may inspect a map of the manufacturing facility, that indicates the order in which the vehicle will pass along lines and through stations, that is stored in memory 305. That is, the server 304 could access a processing sequence that is stored in computer memory 305, which defines the order of the lines and stations that the product will pass through. It will be appreciated that the server 304 can perform similar steps to assign a station identifier to received manufacturing data.

We will now move on to describe various ways in which the manufacturing data that is stored in memory at step 320 of Figure 3B can be processed according to embodiments of the present disclosure. We will describe this as if it is being performed by the same server that saved the manufacturing data to the memory, although it will be appreciated, of course, that any server or processor could perform subsequent processing on the manufacturing data.

In some examples, the server can process the stored operator-provided manufacturing data in order to display all operator-provided manufacturing data that is associated with the same unique product identifier. That is, all of the manufacturing data for the same product can be combined and then displayed in any suitable way. For instance, each set of manufacturing data can be displayed on a screen listed in chronological order based on associated timestamps. This enables the current status of assembly of all products to be determined and visualised in real-time such that any bottlenecks in the process can be readily identified and therefore addressed in order to improve the efficiency of the assembly facility.

The server may also identify and display all non-conformance data associated with the same unique product identifier. This can include displaying the status of each identified non-conformance, along with details of the specific non-conformance. In this way, more accurate and complete details of non-conformances can be determined. Furthermore, it can enable more accurate repair times to be determined because they can be determined for the specific defects that need to be addressed, in real-time, based on resources that are available. This is in contrast to current systems that can ascribe the same "average time to repair" for each identified defect, irrespective what type of defect it is. For instance, an average time to repair of 1 hour 20 minutes may be applied for all defects even though the actual repair timer may be anything between 10 minutes and 3 hours. It is possible to more accurately determine repair times for each identified defect according to aspects of the present disclosure because much richer data is available in the server as part of the operator-provided manufacturing data.

The server may also process the manufacturing data stored in memory in order to provide a summary of all non-conformances, in any of a number of different ways. This can be presented for all products, for all products of a similar type, for one or more specific lines, for one or more specific stations in a line, etc. In addition, the data can be presented in a way that identifies all unresolved faults, all open faults, etc. This can enable the manufacturing facility to be operated more efficiently and more effectively because it can allow non-conformances to be identified and resolved more effectively. In addition, identifying and presenting non-conformances in this way can enable trends to be identified for investigation. For instance, by displaying the non-conformance data in this way, it can be possible for operators to continue to perform their tasks (and therefore for the facility to continue to be operated) in an improved way. This is because any systematic failures can be identified such that engineering changes can be made in order to reduce the number of future non-conformances. Yet further, summarising non-conformances in this way reduce the number of products that are shipped with non-conformances, thereby increasing the rate of product conformance that is achieved by the facility.

In yet further examples, the server may apply an artificial intelligence (AI) algorithm to the manufacturing data in order to identify trends or insights that can be used to improve the performance of one or more of: the manufacturing facility, a line in a manufacturing facility, a station in a manufacturing facility, an individual operator, a specific task that is performed by an operator, etc.

It will be appreciated that the manufacturing data that is stored in the memory could be processed and / or displayed in any of a number of different ways in order to achieve any of the advantages that are disclosed herein.

As identified above, embodiments of the present disclosure are not limited to the automotive industry. Non-limiting examples of other industries include defence vehicles, trains, heavy goods machinery, aerospace, pharmaceuticals and any other manufacturing / assembly industries. Depending upon the industry, the unique product identifier can be implemented in any suitable way, such as by a serial number, a part number, a batch number, etc.

## Claims

1. A computer-implemented method for generating manufacturing data from manual processes within a manufacturing environment from a plurality of operator devices, for ensuring product conformance of products, the method comprising, for each of the plurality of operator devices:
receiving a unique product identifier, which is a unique identifier of a product that is being processed by an operator;
receiving an operator identifier, which is indicative of the operator that is processing, or has processed, the product;
determining one or more of a plurality of different data entry forms for displaying to the operator based on the received unique product identifier and operator identifier, wherein the one or more determined data entry forms are specific to the operator identifier;
displaying the one or more determined data entry forms to the operator on the operator device;
receiving operator-provided manufacturing data into a displayed data entry form;
the operator device transmitting the operator-provided manufacturing data and the accompanying unique product identifier to a server; and
the server storing, in computer memory, the manufacturing data associated with the accompanying unique product identifier received from each of the plurality of operator devices.

2. The computer-implemented method of claim 1, wherein the operator identifier is indicative of one or more tasks that an associated operator is expected to perform on the product.

3. The computer-implemented method of claim 1 or claim 2, wherein the step of the server storing, in computer memory, the received operator-provided manufacturing data associated with the accompanying unique product identifier received from each of the plurality of operator devices comprises:
storing the data in such a way that all received operator-provided manufacturing data that is associated with the same unique product identifier is accessible by searching for the unique product identifier.

4. The computer-implemented method of any preceding claim, wherein the products are vehicles, and the unique product identifier comprises a vehicle identification number.

5. The computer-implemented method of any preceding claim, wherein receiving the unique product identifier comprises the operator scanning a machine-readable code with their operator device.

6. The computer-implemented method of any preceding claim, wherein the operator device comprises a portable electronic device, such as a mobile phone or a tablet computer.

7. The computer-implemented method of any preceding claim, wherein the operator identifier is:
unique to an individual operator,
specific to the operator device,
associated with a class of user, or
associated with a location of the operator device as determined by location-determining data associated with the operator device.

8. The computer-implemented method of any preceding claim, wherein the one or more determined data entry forms have a product identifier field, which is pre-populated with the received unique product identifier.

9. The computer-implemented method of any preceding claim, wherein the one or more determined data entry forms comprise a location field for receiving a location identifier that represents a location of the operator within a facility when they perform the process on the product.

10. The computer-implemented method of claim 9, wherein the method comprises automatically populating the location field.

11. The computer-implemented method of any preceding claim, wherein the one or more determined data entry forms comprise a task completion form, which relates to a task that is to be performed by the operator, and wherein the task completion form comprises one or more of the following fields:
a task description field, for presenting a predefined set of selectable options to the operator;
a comment field, for receiving the operator's comments as free text; and
an image field for receiving images of the product before, during or after the task.

12. The computer-implemented method of any preceding claim, wherein the one or more determined data entry forms comprise a non-conformance entry form for an operator to record an identified non-conformance associated with the product, and wherein the non-conformance entry form comprises one or more of the following fields:
a non-conformance description field, for presenting a predefined set of selectable options to the operator;
a non-conformance type field, for presenting a predefined set of selectable options to the operator;
a comment field, for receiving the operator's comments as free text;
an image field, for receiving an image of the identified non-conformance;
an engineering drawing field for one or more components of the product for annotation by the operator for providing details of the identified non-conformance.

13. The computer-implemented method of any preceding claim, wherein the one or more determined data entry forms comprise a non-conformance review form for an operator to record the results of a review of a previously identified non-conformance associated with the product, wherein the non-conformance review form comprises one or more of the following fields:
a non-conformance identifier field for receiving a non-conformance identifier that is associated with the previously identified non-conformance;
a non-conformance information field, which displays previously provided non-conformance data, including any previously captured images or previously annotated engineering drawings.
a non-conformance status field, for receiving an update on the status of the non-conformance from the operator;
a comment field, for receiving the operator's comments as free text;
an image field, for receiving an image of the identified non-conformance;
an engineering drawing field for one or more components of the product for annotation by the operator for providing details of the status of the identified non-conformance.

14. A computer program, which when run on a computer, causes the computer to perform the method of any preceding claim.
